# EUROPEAN PATENT APPLICATION

(11) **EP 4 446 713 A1**
(43) Date of publication of application: **16.10.2024**
(21) Application number: 23167545.5
(22) Date of filing: 12.04.2023
(51) Int. Cl.: G01K 3/04, G01K 11/06

(54) **METHOD AND MEANS FOR MONITORING FROZEN BIOLOGICAL SAMPLES**

(71) Applicant: Minitüb GmbH, 84184 Tiefenbach (DE)
(72) Inventor: Simmet, Christian, 84036 Landshut (DE); Zaritskiy, Dmitry, 84034 Landshut (DE)
(74) Representative: Grahn, Sibylla Maria

(57) **Abstract**

The present invention relates to methods for monitoring frozen biological samples said methods comprising the use of a temperature monitoring tube. The present invention further relates to a temperature monitoring tube and its use and a biological sample storage kit.

## Description

The present invention relates to methods for monitoring frozen biological samples said methods comprising the use of a temperature monitoring tube. The present invention further relates to a temperature monitoring tube and its use and a biological sample storage kit.

### BACKGROUND OF THE INVENTION

Low-temperature preservation or cryopreservation is a process where biological material, such as cells and tissues, are frozen to preserve the material for an extended period of time. At low temperatures, typically below -80 °C or even about -196 °C using liquid nitrogen, any cell metabolism which might cause damage to the biological material in question is effectively stopped. Cryopreservation is an effective way to transport biological samples over long distances, store samples for prolonged periods of time, and create a bank of samples for users.

In particular, semen which is to be used for artificial insemination or *in vitro* fertilization is frozen and then stored in specific sample containers or tubes and held in liquid nitrogen. While if melted and refrozen semen would not be fit to use, it has been established that at -100°C semen is biologically inactive but if exposed to temperatures much higher, such as above -80°C, it will start to deteriorate and become sub-standard. At the present time, there are no means to prevent sub-standard semen from being used.

There is a need in the art for improved methods and means for quality management of cryopreserved biological samples, such as semen samples.

### SUMMARY OF THE INVENTION

According to the present invention this object is solved by a method for monitoring frozen biological samples, comprising the steps of:
(1) providing an indicator comprising a dye and an air permeable plug, wherein said indicator is liquid at room temperature, solid when frozen to at least below -80°C and thaws at the temperature critical for a biological sample,
(2a) placing the air permeable plug into a sample tube which serves as the temperature monitoring tube,
   wherein the air permeable plug is placed at a defined position in the temperature monitoring tube;
   wherein the temperature monitoring tube preferably comprises a marking at the defined position; and
(3a) soaking the air permeable plug with an aliquot of the indicator; or
(2b) soaking the air permeable plug with an aliquot of the indicator; and
(3b) placing the air permeable plug obtained in step (2b) into a sample tube which serves as the temperature monitoring tube,
   wherein the air permeable plug is placed at a defined position in the temperature monitoring tube,
   wherein the temperature monitoring tube preferably comprises a marking at the defined position;
(4) freezing the air permeable plug in the temperature monitoring tube to at least below - 80°C and thereby fixating the frozen air permeable plug at said defined position;
(5) placing a pushing means and optionally a positioning means next to the frozen air permeable plug while being fixated at said defined position;
(6) filling the biological sample into at least one further sample tube;
(7) freezing the biological sample to at least below -80°C;
(8) storing the frozen biological sample in the at least one further sample tube together with the temperature monitoring tube in the same storage containment in liquid nitrogen or in nitrogen vapor,
(9) monitoring the temperature monitoring tube during storage and/or checking the temperature monitoring tube before the intended use of the biological sample, wherein
   a plug which is not at the defined position indicates an exposure to temperatures above the temperature critical for the biological sample, and
   a plug which is at the defined position indicates that there was no exposure to temperatures above the temperature critical for the biological sample.

According to the present invention this object is solved by a method for monitoring frozen biological samples, comprising the steps of:
(1) providing an indicator comprising a dye,
   wherein said indicator is liquid at room temperature, solid when frozen to at least below -80°C and thaws at the temperature critical for a biological sample,
   wherein said indicator optionally shrinks when frozen to at least below -80°C and expands while thawing,
(2) placing an air permeable plug in a sample tube which serves as the temperature monitoring tube,
   wherein said air permeable plug is of such a color that it becomes visible in case the indicator has entered into the air permeable plug;
(3) placing an aliquot of said indicator in the temperature monitoring tube,
   wherein the indicator aliquot is placed at a defined position of the temperature monitoring tube,
   wherein the temperature monitoring tube preferably comprises a marking at the defined position;
(4) freezing the indicator aliquot located in the temperature monitoring tube to at least below -80°C,
   wherein the frozen indicator aliquot is fixated at the defined position;
(5) moving the air permeable plug such that it is close to the frozen indicator aliquot or is optionally at the level of the indicator aliquot before it was frozen,
(6) filling the biological sample into at least one further sample tube;
(7) freezing the biological sample to at least below -80°C;
(8) storing the frozen biological sample in the at least one further sample tube together with the temperature monitoring tube in the same storage containment in liquid nitrogen or in nitrogen vapor,
(9) monitoring the temperature monitoring tube during storage and/or checking the temperature monitoring tube before the intended use of the biological sample, wherein:
   an indicator aliquot which is not at the defined position and optionally a colored plug indicates an exposure to temperatures above the temperature critical for the biological sample, and
   an indicator aliquot which is at the defined position and optionally a plug without color change indicates that there was no exposure to temperatures above the temperature critical for the biological sample.

According to the present invention this object is solved by a temperature monitoring tube, comprising:
(a) an air permeable plug soaked with an indicator comprising a dye,
   wherein said indicator is liquid at room temperature, solid when frozen to at least below -80°C and thaws at the temperature critical for a biological sample,
   wherein said air permeable plug is located at a defined position in the temperature monitoring tube and is fixated at said defined position by freezing, and
(b) a pushing means, which is located next to the frozen air permeable plug, and
(c) optionally, a positioning means.

According to the present invention this object is solved by a temperature monitoring tube, comprising:
(a) an indicator comprising a dye,
   wherein said indicator is liquid at room temperature, solid when frozen to at least below -80°C and thaws at the temperature critical for a biological sample,
   wherein said indicator is placed into the temperature monitoring tube at a defined position in its liquid state and becomes fixated at said defined position while frozen, and
(b) an air permeable plug, which is close to the indicator when it is frozen.

According to the present invention this object is solved by the use of a temperature monitoring tube according to the present invention for monitoring frozen biological samples.

According to the present invention this object is solved by a biological sample storage kit, comprising:
(a) at least one sample tube, and
(b) at least one temperature monitoring tube according to the present invention,
(c) optionally, a storage containment.

### DESCRIPTION OF THE PREFERRED EMBODIMENTS OF THE INVENTION

Before the present invention is described in more detail below, it is to be understood that this invention is not limited to the particular methodology, protocols and reagents described herein as these may vary. It is also to be understood that the terminology used herein is for the purpose of describing particular embodiments only and is not intended to limit the scope of the present invention which will be limited only by the appended claims. Unless defined otherwise, all technical and scientific terms used herein have the same meanings as commonly understood by one of ordinary skill in the art. For the purpose of the present invention, all references cited herein are incorporated by reference in their entireties.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "50 to 500" should be interpreted to include not only the explicitly recited values of 50 to 500, but also include individual values and sub-ranges within the indicated range. Thus, included in this numerical range are individual values such as 50, 51, 52, 53, 54, ... 497, 498, 499, 500 and sub-ranges such as from 100 to 400, from 120 to 300 and 405 to 500, etc. This same principle applies to ranges reciting only one numerical value, such as "below -80°C" or below -150°C". Furthermore, such an interpretation should apply regardless of the breadth of the range or the characteristics being described. Also it is to be understood that ranges may differ depending on the institute/facility where the measurements are being performed, methodology of measurement, type of tissue, and technique of tissue collection.

### Methods for monitoring frozen biological samples

The present invention provides methods for monitoring frozen biological samples.

A "frozen biological sample" comprises and/or refers to a cryo-preserved sample.

In *a first embodiment of the method of the present invention*, the method for monitoring frozen biological samples comprises the steps of:
(1) providing an indicator comprising a dye and an air permeable plug,
   wherein said indicator is liquid at room temperature, solid when frozen to at least below -80°C and thaws at the temperature critical for a biological sample,
(2a) and (2b) or (2b) and (3b),
   wherein step (2a) is: placing the air permeable plug into a sample tube which serves as the temperature monitoring tube,
   wherein the air permeable plug is placed at a defined position in the temperature monitoring tube;
   wherein the temperature monitoring tube preferably comprises a marking at the defined position; and
step (3a) is: soaking the air permeable plug with an aliquot of the indicator; or
step (2b) is: soaking the air permeable plug with an aliquot of the indicator; and
step (3b) is: placing the air permeable plug obtained in step (2b) into a sample tube which serves as the temperature monitoring tube,
   wherein the air permeable plug is placed at a defined position in the temperature monitoring tube,
   wherein the temperature monitoring tube preferably comprises a marking at the defined position;
(4) freezing the air permeable plug in the temperature monitoring tube to at least below - 80°C and thereby fixating the frozen air permeable plug at said defined position;
(5) placing a pushing means and optionally a positioning means next to the frozen air permeable plug while being fixated at said defined position;
(6) filling the biological sample into at least one further sample tube;
(7) freezing the biological sample to at least below -80°C;
(8) storing the frozen biological sample in the at least one further sample tube together with the temperature monitoring tube in the same storage containment in liquid nitrogen or in nitrogen vapor,
(9) monitoring the temperature monitoring tube during storage and/or checking the temperature monitoring tube before the intended use of the biological sample, wherein
   a plug which is not at the defined position indicates an exposure to temperatures above the temperature critical for the biological sample, and
   a plug which is at the defined position indicates that there was no exposure to temperatures above the temperature critical for the biological sample.

Preferably, the biological sample is semen, oocytes or non-human embryos.

The present invention does not refer to the use of human embryos for industrial or commercial purposes.

In one preferred embodiment, the biological sample is semen. The temperature critical for semen is about -80°C.

In a preferred embodiment, the biological sample is a vitrified sample. The temperature critical for the vitrified sample is about -150°C.

Vitrification is a flash-freezing (ultra-rapid cooling) process that helps to prevent the formation of ice crystals and helps prevent cryopreservation damage. A "vitrified sample" refers to a biological sample which is obtained via vitrification.

The "critical temperature" as used herein refers to the temperature of a frozen or cryo-preserved biological sample at which and above which the quality of the biological sample decreases.

For example, frozen semen, such as frozen semen intended for use in artificial insemination or *in vitro* fertilization, can be stored for a long time (up to several years) if it is maintained constantly at very low temperatures. The critical temperature is about -80°C. Frozen semen that is exposed to temperatures warmer than -80°C (even for a short period of time) and then returned to the storage container may be damaged. The extent of damage depends upon how long the semen is exposed to elevated temperatures. Although it is easy to maintain frozen semen at a safe temperature, it is also easy to destroy its quality in a few moments of carelessness.

### - Step (1)

In step (1), an *indicator* liquid comprising a dye and *an air permeable plug* are provided.

The air permeable plug is preferably made of material the indicator can penetrate or enter. For example, a wick, a cotton pad or powder. The skilled artisan can choose further suitable materials for the air permeable plug.

The indicator fulfills the following criteria:
(i) it is liquid at room temperature,
(ii) it is solid when frozen to at least below -80°C, and
(iii) it thaws at the temperature critical for the biological sample,

In one embodiment, the indicator comprises alcohol. In one embodiment, the indicator comprises a mixture or combination of alcohols. In one embodiment, the indicator comprises a mixture or combination of alcohols and/or water. The skilled artisan will be able to choose the indicator depending on the biological sample.

Examples of alcohols are propanol, ethanol, butane-1,2-diol, butane-2-ol, and pentan-1-ol.

In one embodiment, the indicator comprises 10 to 100 vol-% propanol.

In one embodiment, the indicator comprises 10 to 100 vol-% ethanol.

In one embodiment, the indicator comprises 10 to 100 vol-% of a mixture of propanol and ethanol.

In one embodiment, the dye is a red dye. The dye is preferably a food coloring dye or a food dye.

The air permeable plug is preferably of such a color that it becomes visible in case the indicator has entered into the air permeable plug.

For example, the color of the air permeable plug is white or beige.

### - Embodiment (a) Steps (2a) and (2b)

In step (2a), the air permeable plug is placed into a tube or a sample tube which serves as the temperature monitoring tube.

Thereby, the air permeable plug is placed at a defined position in the temperature monitoring tube.

The temperature monitoring tube preferably comprises a marking at the defined position. For example, the marking is a blackening or a black marking. In one embodiment, the marking has a size such that the plug is hidden when it is at the defined position.

In step (3a), the air permeable plug is soaked with an aliquot of the indicator

For example, an aliquot of indicator is placed onto the plug and the indicator then enters into the plug or impregnates the plug.

### - Embodiment (b) Steps (3a) and (3b)

In step (2b), the air permeable plug is soaked with an aliquot of the indicator.

For example, an aliquot of indicator is placed onto the plug and the indicator then enters into the plug or impregnates the plug or the plug is embedded with indicator.

In step (3b), the air permeable plug obtained in step (2a) is placed into a tube or a sample tube which serves as the temperature monitoring tube.

Thereby, the air permeable plug is placed at a defined position in the temperature monitoring tube.

The temperature monitoring tube preferably comprises a marking at the defined position. For example, the marking is a blackening or a black marking. In one embodiment, the marking has a size such that the plug is hidden when it is at the defined position.

### - Step (4)

In step (4), the air permeable plug in the temperature monitoring tube is frozen to at least below -80°C. Due to the freezing, air permeable plug is fixated at the defined position.

Said fixation occurs due to ice crystals which are formed between the plug and the side walls of the temperature tube.

The freezing temperature depends on the biological sample.

In some embodiments, the biological sample is frozen with liquid nitrogen. In said embodiments, the temperature monitoring tube is also frozen with liquid nitrogen.

### - Step (5)

In step (5), a pushing means and optionally a positioning means are placed next to the frozen air permeable plug into the temperature monitoring tube.

The air permeable plug is frozen and thus fixed in the defined position.

The pushing means preferably touches the frozen air permeable plug.

In a preferred embodiment, the pushing means is a spring, which is tightened/tensioned after it is being placed next to the frozen plug. In this embodiment, the positioning means is a clamp rod which keeps the spring tightened/tensioned.

### - Step (6)

In step (6), the biological sample is filled into at least one further sample tube.

In one embodiment, the sample tube is a tube for semen. The semen is preferably intended for use in artificial insemination or *in vitro* fertilization.

Step (6) can be carried out after steps (1) to (5). Step (6) can be carried out before steps (1) to (5).

### - Step (7)

In step (7), the biological sample is frozen to at least below -80°C.

The freezing temperature depends on the biological sample.

In some embodiments, the biological sample is frozen with liquid nitrogen.

Steps (6) and (7) can be carried out after steps (1) to (5). Step (6) and (7) can be carried out before steps (1) to (5). Step (7) can be carried out in parallel to step (4).

### - Step (8)

In step (8), the frozen biological sample in the at least one further sample tube is stored together with the temperature monitoring tube in the same storage containment.

Said storage containment can be a tank.

For example, the storage containment, such as a tank, contains a multitude of sample tubes (with the frozen biological sample), such as up to several thousand sample tubes or several hundred sample tubes (e.g. up to 500), and one temperature monitoring tube.

In one embodiment, the storage containment is a tank which contains smaller containments, such as canisters (such as up to 8 or 10 canisters per tank), wherein each canister can contain smaller containments, such as so-called goblets. Each goblet contains a multitude of sample tubes (with the frozen biological sample) and at least one temperature monitoring tube, such as 50 to 500 sample tubes per goblet, or 5 to 25 sample tubes per goblet.

The frozen biological sample in the at least one further sample tube together with the temperature monitoring tube is preferably stored in liquid nitrogen or in nitrogen vapor.

The storage can be over a period of time. The length of the time period can be from one day up to several years, such as one day to one year.

### - Step (9)

In step (9), the temperature monitoring tube is monitored during the storage.

Before the intended use of the biological sample, the temperature monitoring tube can be checked.

Thereby the position of the air permeable plug is observed or monitored, preferably by visual inspection more preferably by eye. It is observed or monitored whether the plug is at the defined position or not.

A plug which is not at the defined position indicates an exposure to temperatures above the temperature critical for the biological sample.

At temperatures above the critical temperatures, the indicator thaws and becomes liquid such that also the plug is no longer frozen. This results in loosening the tight fixation of the plug to the inner wall of the tube exerted by the ice crystals formed during the freezing of the indicator liquid. The loss of the ice crystals allows the tightened spring to push or move the plug from the defined position, and the spring become less tightened or even loose.

A plug which is at the defined position indicates that there was no exposure to temperatures above the temperature critical for the biological sample.

Here, the spring is still tightened.

In one embodiment, where the temperature monitoring tube comprises a black marking at the defined position:
When there was no exposure to temperatures above the temperature critical for the biological sample: the plug is still at the defined position and is not visible because it is behind the black marking (it is hidden by the black marking). The pushing means, such as a spring, is tightened.

When there was exposure to temperatures above the temperature critical for the biological sample: the plug is no longer at the defined position and is visible because it is no longer behind the black marking. The pushing means, such as a spring, is less tightened or even loose and has pushed/moved the plug.

In *a further embodiment of the method of the present invention,* the method for monitoring frozen biological samples comprises the steps of:
(1) providing an indicator comprising a dye,
   wherein said indicator is liquid at room temperature, solid when frozen to at least below -80°C and thaws at the temperature critical for a biological sample,
(2) placing an air permeable plug in a sample tube which serves as the temperature monitoring tube,
   wherein said air permeable plug is of such a color that it becomes visible in case the indicator has entered into the air permeable plug;
(3) placing an aliquot of said indicator in the temperature monitoring tube,
   wherein the indicator aliquot is placed at a defined position of the temperature monitoring tube,
   wherein the temperature monitoring tube preferably comprises a marking at the defined position;
(4) freezing the indicator located in the temperature monitoring tube to at least below -80°C, wherein the frozen indicator aliquot is fixated at the defined position;
(5) moving the air permeable plug such that it is close to the frozen indicator aliquot;
(6) filling the biological sample into at least one further sample tube;
(7) freezing the biological sample to at least below -80°C ;
(8) storing the frozen sample in the at least one further sample tube together with the temperature monitoring tube in the same storage containment in liquid nitrogen or in nitrogen vapor,
(9) monitoring the temperature monitoring tube during storage or checking the temperature monitoring tube before the intended use of the biological sample, wherein:
   an indicator aliquot which is not at the defined position and optionally a colored plug indicates an exposure to temperatures above the temperature critical for the biological sample, and
   an indicator aliquot which is at the defined position and optionally a plug without color change indicates that there was no exposure to temperatures above the temperature critical for the biological sample.

Preferably, the biological sample is semen, oocytes or non-human embryos.

As discussed above, the present invention does not refer to the use of human embryos for industrial or commercial purposes.

In one preferred embodiment, the biological sample is semen. The temperature critical for semen is about -80°C.

In a preferred embodiment, the biological sample is a vitrificated sample. The temperature critical for the vitrificated sample is about -150°C.

### - Step (1)

In step (1), an *indicator* comprising a dye is provided.

The indicator fulfills the following criteria:
(i) it is liquid at room temperature,
(ii) it is solid when frozen to at least below -80°C, and
(iii) it thaws at the temperature critical for the biological sample.

In one embodiment, the indicator shrinks when frozen to at least below -80°C and expands while thawing.

In one embodiment, the indicator comprises alcohol. In one embodiment, the indicator comprises a mixture or combination of alcohols. In one embodiment, the indicator comprises a mixture or combination of alcohols and/or water. The skilled artisan will be able to choose the indicator depending on the biological sample.

Examples of alcohols are propanol, ethanol, butane-1,2-diol, butane-2-ol, and pentan-1-ol.

In one embodiment, the indicator comprises 10 to 100 vol-% propanol.

In one embodiment, the indicator comprises 10 to 100 vol-% ethanol.

In one embodiment, the indicator comprises 10 to 100 vol-% of a mixture of propanol and ethanol.

In one embodiment, the dye is a red dye. The dye is preferably a food coloring dye or a food dye.

### - Step (2)

In step (2), an *air permeable plug* is introduced into the temperature monitoring tube.

The air permeable plug is preferably made of material the indicator can penetrate or enter. For example, a wick, a cotton pad or powder. The skilled artisan can choose further suitable materials for the air permeable plug.

The air permeable plug is preferably of such a color that it becomes visible in case the indicator has entered into the air permeable plug.

For example, the color of the air permeable plug is white or beige.

The air permeable plug is preferably of such a color that also small amounts of indicator liquid, such as one to several microliter, that have entered into the plug can be seen, preferably by visible inspection, such as by eye.

### - Step (3)

In step (3), an aliquot of said indicator is filled into the temperature monitoring tube.

Thereby, the indicator aliquot is placed at a defined position of the temperature monitoring tube.

The temperature monitoring tube preferably comprises a marking at the defined position.

For example, the marking is a blackening or a black marking. In one embodiment, the marking has a size such that the indicator (when it is frozen) is hidden when it is at the defined position.

In one embodiment, the indicator is in liquid state when it is filled into the temperature monitoring tube.

In one embodiment, the aliquot of the indicator is a frozen pellet of indicator. In said embodiment, the frozen pellet of indicator is filled into the temperature monitoring tube at the defined position.

In this embodiment, step (4) can be omitted. In order to fixate the frozen pellet at the defined position, plugs can be placed into the temperature tube on both sides of the frozen pellet; or one plug can be placed into the temperature tube on one side of the frozen pellet and the temperature monitoring tube can be closed/sealed on the other side.

### - Step (4)

In step (4), the indicator aliquot located in the temperature monitoring tube is frozen to at least below -80°C.

Thereby, the frozen indicator aliquot is fixated at the defined position.

The freezing temperature depends on the biological sample.

In some embodiments, the biological sample is frozen with liquid nitrogen. In said embodiments, the indicator aliquot located in the temperature monitoring tube is also frozen with liquid nitrogen.

### - Step (5)

In step (5), the air permeable plug is moved or pushed towards the frozen indicator aliquot such that it is close to the frozen indicator aliquot.

In one embodiment, preferably where an indicator is used that shrinks when frozen to at least below -80°C and expands while thawing, the air permeable plug is preferably introduced into the temperature monitoring tube such that it is close to the frozen indicator aliquot or is at the level of the indicator aliquot before it was frozen. In this embodiment, the indicator can enter into the plug only in case it thaws (and thereby preferably expands) due to temperatures at or above the critical temperature.

### - Step (6)

In step (6), the biological sample is filled into at least one further sample tube.

In one embodiment, the sample tube is a tube for semen. The semen is preferably intended for use in artificial insemination or *in vitro* fertilization.

Step (6) can be carried out after steps (1) to (5). Step (6) can be carried out before steps (1) to (5). Step (5) can be carried out in parallel to step (3).

### - Step (7)

In step (7), the biological sample is frozen to at least below -80°C.

The freezing temperature depends on the biological sample.

In some embodiments, the biological sample is frozen with liquid nitrogen.

Steps (6) and (7) can be carried out after steps (1) to (5). Step (6) and (7) can be carried out before steps (1) to (5). Step (7) can be carried out in parallel to step (4).

### - Step (8)

In step (8), the frozen biological sample in the at least one further sample tube is stored together with the temperature monitoring tube in the same storage containment.

Said storage containment can be a tank.

For example, the storage containment, such as a tank, contains a multitude of sample tubes (with the frozen biological sample), such as up to several thousand sample tubes or several hundred sample tubes (e.g. up to 500), and one temperature monitoring tube.

In one embodiment, the storage containment is a tank which contains smaller containments, such as canisters (such as up to 8 or 10 canisters per tank), wherein each canister can contain smaller containments, such as so-called goblets. Each goblet contains a multitude of sample tubes (with the frozen biological sample) and at least one temperature monitoring tube, such as 50 to 500 sample tubes per goblet, or 5 to 25 sample tubes per goblet.

The frozen biological sample in the at least one further sample tube together with the temperature monitoring tube is preferably stored in liquid nitrogen or in nitrogen vapor.

The storage can be over a period of time. The length of the time period can be from one day up to several years, such as one day to one year.

### - Step (9)

In step (9), the temperature monitoring tube is monitored during the storage.

Before the intended use of the biological sample, the temperature monitoring tube is checked.

Thereby the position of the indicator aliquot is observed or monitored, preferably by visual inspection more preferably by eye. It is observed or monitored whether the indicator aliquot is at the defined position or not.

An indicator aliquot which is not at the defined position indicates an exposure to temperatures above the temperature critical for the biological sample.

An indicator aliquot which is at the defined position indicates that there was no exposure to temperatures above the temperature critical for the biological sample.

Optionally, also the color of the air permeable plug is observed or monitored, preferably by visual inspection more preferably by eye. It is checked whether it has changed its color during storage.

A colored plug can so further indicate an exposure to temperatures above the temperature critical for the biological sample.

A plug without color change can so further indicate that there was no exposure to temperatures above the temperature critical for the biological sample.

A "colored" air permeable plug refers also to a partially colored air permeable plug.

In one embodiment, where the temperature monitoring tube comprises a black marking at the defined position:
When there was no exposure to temperatures above the temperature critical for the biological sample: the indicator aliquot is still frozen and thus is still at the defined position and is not visible because it is behind the black marking (it is hidden by the black marking). Preferably, the plug is not colored.

When there was exposure to temperatures above the temperature critical for the biological sample: the indicator aliquot is no longer frozen and is thus no longer at the defined position and is visible because it is no longer behind the black marking. Preferably, the plug is colored.

For example, the dye contained in the indicator is a red dye and the air permeable plug is a white or beige wick. As soon as indicator enters the plug, even small amounts (such as several microliters) the red color can be seen during visible inspection, preferably by eye.

### Temperature monitoring tubes

The present invention provides temperature monitoring tubes.

In *a first embodiment of temperature monitoring tube of the present invention,* the temperature monitoring tube comprises:
(a) *an air permeable plug* soaked with an *indicator* comprising a dye,
(b) a *pushing means,* which is located next to the air permeable plug, and
(c) optionally, a *positioning means.*

Said indicator is liquid at room temperature, solid when frozen to at least below -80°C and thaws at the temperature critical for a biological sample, and

The air permeable plug is located at a defined position in the temperature monitoring tube. It becomes fixated at said defined position after being frozen.

The *indicator* comprises a dye.

As discussed above, the indicator fulfills the following criteria:
(i) it is liquid at room temperature,
(ii) it is solid when frozen to at least below -80°C, and
(iii) it thaws at the temperature critical for the biological sample.

In one embodiment, the indicator comprises alcohol. In one embodiment, the indicator comprises a mixture or combination of alcohols and/or water. The skilled artisan will be able to choose the indicator depending on the biological sample.

Examples of alcohols are propanol, ethanol, butane-1,2-diol, butane-2-ol, and pentan-1-ol.

In one embodiment, the indicator comprises 10 to 100 vol-% propanol.

In one embodiment, the indicator comprises 10 to 100 vol-% ethanol.

In one embodiment, the indicator comprises 10 to 100 vol-% of a mixture of propanol and ethanol.

In one embodiment, the dye is a red dye. The dye is preferably a food coloring dye or a food dye.

The *air permeable plug* is located at a defined position in the temperature monitoring tube.

The air permeable plug is preferably made of material the indicator can enter or penetrate. For example, a wick, a cotton pad or powder. The skilled artisan can choose further suitable materials for the air permeable plug.

As discussed above, the air permeable plug becomes fixated at said defined position by freezing.

Due to the freezing, air permeable plug is fixated at the defined position. Said fixation occurs due to ice crystals which are formed between the plug and the side walls of the temperature tube.

The temperature monitoring tube further comprises a *pushing means.*

The pushing means and optionally a positioning means are placed next to the frozen air permeable plug into the temperature monitoring tube.

The air permeable plug is frozen and thus fixed in the defined position.

The pushing means preferably touches the frozen air permeable plug.

In a preferred embodiment, the pushing means is a spring, which is tightened/tensioned after it is being placed next to the frozen plug. In this embodiment, the positioning means is a clamp rod which keeps the spring tightened/tensioned.

The temperature monitoring tube preferably comprises a marking at the defined position. For example, the marking is a blackening or a black marking. In one embodiment, the marking has a size such that the plug is hidden when it is at the defined position.

In one preferred embodiment, the biological sample is semen. The temperature critical for semen is about -80°C.

In a preferred embodiment, the biological sample is a vitrificated sample. The temperature critical for the vitrificated sample is about -150°C.

In a *further embodiment of the temperature monitoring tube of the present invention,* the temperature monitoring tube comprises:
(a) an *indicator* comprising a dye,
   wherein said indicator is liquid at room temperature, solid when frozen to at least below - 80°C and thaws at the temperature critical for a biological sample,
   wherein said indicator is placed into the temperature monitoring tube at a defined position in its liquid state and becomes fixated at said defined position while frozen,
      and
(b) an *air permeable plug,* which is close to the indicator when it is frozen.

The *indicator* comprises a dye.

The indicator is placed into the temperature monitoring tube at a defined position in its liquid state.

The indicator becomes fixated at said defined position when it is frozen.

As discussed above, the indicator fulfills the following criteria:
(iv) it is liquid at room temperature,
(v) it is solid when frozen to at least below -80°C, and
(vi) it thaws at the temperature critical for the biological sample.

In one embodiment, the indicator further shrinks when frozen to at least below -80°C and expands while thawing.

In one embodiment, the indicator comprises alcohol. In one embodiment, the indicator comprises a mixture or combination of alcohols and/or water. The skilled artisan will be able to choose the indicator depending on the biological sample.

Examples of alcohols are propanol, ethanol, butane-1,2-diol, butane-2-ol, and pentan-1-ol.

In one embodiment, the indicator comprises 10 to 100 vol-% propanol.

In one embodiment, the indicator comprises 10 to 100 vol-% ethanol.

In one embodiment, the indicator comprises 10 to 100 vol-% of a mixture of propanol and ethanol.

In one embodiment, the dye is a red dye. The dye is preferably a food coloring dye or a food dye.

In one embodiment, the indicator is in liquid state when it is filled into the temperature monitoring tube.

In one embodiment, the aliquot of the indicator is a frozen pellet of indicator. In said embodiment, the frozen pellet of indicator is filled into the temperature monitoring tube at the defined position.

The temperature monitoring tube preferably comprises a marking at the defined position. For example, the marking is a blackening or a black marking. In one embodiment, the marking has a size such that the indicator (when it is frozen) is hidden when it is at the defined position.

The *air permeable plug* is preferably made of material the indicator can enter or penetrate. For example, a wick, a cotton pad or powder. The skilled artisan can choose further suitable materials for the air permeable plug.

As discussed above, the air permeable plug is preferably of such a color that it becomes visible in case the indicator has entered into the air permeable plug.

For example, the color of the air permeable plug is white or beige.

The air permeable plug is preferably of such a color that also small amounts of indicator liquid, such as one to several microliter, that have entered into the plug can be seen, preferably by visible inspection, such as by eye.

The air permeable plug can be introduced into the temperature monitoring tube after the indicator is frozen.

As discussed above, the air permeable plug is close to the frozen indicator.

In one embodiment, where an indicator is used that preferably shrinks when frozen to at least below -80°C and expands while thawing, the air permeable plug is preferably introduced into the temperature monitoring tube such that it is close to the frozen indicator aliquot or is at the level of the indicator aliquot before it was frozen. In this embodiment, the indicator can enter into the plug only in case it thaws (and thereby preferably expands) due to temperatures at or above the critical temperature.

In one preferred embodiment, the biological sample is semen. The temperature critical for semen is about -80°C.

In a preferred embodiment, the biological sample is a vitrificated sample. The temperature critical for the vitrificated sample is about -150°C.

### Use of the temperature monitoring tube for monitoring frozen biological samples

The present invention provides the use of the temperature monitoring tubes of the present invention for monitoring frozen biological samples.

Preferably, the temperature monitoring tube of the present invention is stored in the same storage containment as at least one frozen biological sample or a multitude of frozen biological samples.

Preferably, during storage the temperature monitoring tube is monitored.

Before the intended use of the biological sample, preferably, the temperature monitoring tube is checked.

In one embodiment, the temperature monitoring tube of the present invention is a temperature monitoring tube which comprises an air permeable plug soaked with an indicator comprising a dye, wherein said indicator is liquid at room temperature, solid when frozen to at least below -80°C and thaws at the temperature critical for a biological sample, and wherein said air permeable plug is located at a defined position in the temperature monitoring tube and is fixated at said defined position by freezing, and which further comprises a pushing means and, optionally, a positioning means.

In this embodiment, and as discussed above:
The position of the air permeable plug is observed or monitored, preferably by visual inspection more preferably by eye. It is observed or monitored whether the plug is at the defined position or not.

A plug which is not at the defined position indicates an exposure to temperatures above the temperature critical for the biological sample.

At temperatures above the critical temperatures, the indicator thaws and becomes liquid such that also the plug is no longer frozen. This results in loosening the tight fixation of the plug to the inner wall of the tube exerted by the ice crystals formed during the freezing of the indicator liquid. The loss of the ice crystals allows the tightened spring to push / move the plug from the defined position, and the spring become less tightened or even loose.

A plug which is at the defined position indicates that there was no exposure to temperatures above the temperature critical for the biological sample.

Here, the spring is still tightened.

In one embodiment, where the temperature monitoring tube comprises a black marking at the defined position:
When there was no exposure to temperatures above the temperature critical for the biological sample: the plug is still at the defined position and is not visible because it is behind the black marking (it is hidden by the black marking). The pushing means, such as a spring, is tightened.

When there was exposure to temperatures above the temperature critical for the biological sample: the plug is no longer at the defined position and is visible because it is no longer behind the black marking. The pushing means, such as a spring, is is less tightened or even loose, and has pushed/moved the plug.

In one embodiment, the temperature monitoring tube of the present invention is a temperature monitoring tube which comprises (a) an *indicator* comprising a dye, wherein said indicator is liquid at room temperature, solid when frozen to at least below -80°C and thaws at the temperature critical for a biological sample, and
wherein said indicator is placed into the temperature monitoring tube at a defined position in its liquid state and becomes fixated at said defined position while frozen, and (b) an *air permeable plug,* which is close to the indicator when it is frozen.

In this embodiment, and as discussed above:
The position of the indicator is observed or monitored, preferably by visual inspection more preferably by eye. It is observed or monitored whether the indicator is at the defined position or not.

An indicator aliquot which is not at the defined position indicates an exposure to temperatures above the temperature critical for the biological sample.

An indicator aliquot which is at the defined position indicates that there was no exposure to temperatures above the temperature critical for the biological sample.

Optionally, also the color of the air permeable plug is observed or monitored, preferably by visual inspection more preferably by eye. It is checked whether it has changed its color during storage.

A colored plug can so further indicate an exposure to temperatures above the temperature critical for the biological sample.

A plug without color change can so further indicate that there was no exposure to temperatures above the temperature critical for the biological sample.

A "colored" air permeable plug refers also to a partially colored air permeable plug.

In one embodiment, where the temperature monitoring tube comprises a black marking at the defined position:
When there was no exposure to temperatures above the temperature critical for the biological sample: the indicator aliquot is still frozen and thus is still at the defined position and is not visible because it is behind the black marking (it is hidden by the black marking). Preferably, the plug is not colored.

When there was exposure to temperatures above the temperature critical for the biological sample: the indicator aliquot is no longer frozen and is thus no longer at the defined position and is visible because it is no longer behind the black marking. Preferably, the plug is colored.

### Biological sample storage kit

The present invention provides a biological sample storage kit.

The biological sample storage kit is suitable to be used for freezing biological samples. The biological sample storage kit is suitable to be used for monitoring the frozen biological samples.

The biological sample storage kit is suitable to be used in the method of the present invention.

The biological sample storage kit of the present invention comprises:
(a) at least one *sample tube*, and
(b) at least one *temperature monitoring tube* according to the present invention
(c) optionally, a storage containment.

Preferably, the biological sample is semen, oocytes or non-human embryos,

As discussed above, the present invention does not refer to the use of human embryos for industrial or commercial purposes.

In one preferred embodiment, the biological sample is semen. The temperature critical for semen is about -80 °C.

In a preferred embodiment, the biological sample is a vitrificated sample. The temperature critical for the vitrificated sample is about -150°C.

In one embodiment, the sample tube is a seminal tube.

The sample tube can be a tube for semen. The semen is preferably intended for use in artificial insemination or *in vitro* fertilization.

The kit comprises at least one *temperature monitoring tube* of the present invention.

The storage containment can be a tank.

For example, the storage containment, such as a tank, contains a multitude of sample tubes (with the frozen biological sample), such as up to several thousand sample tubes or several hundred sample tubes (e.g. up to 500), and one temperature monitoring tube.

In one embodiment, the storage containment is a tank which contains smaller containments, such as canisters (such as up to 8 or 10 canisters per tank), wherein each canister can contain smaller containments, such as so-called goblets. Each goblet contains a multitude of sample tubes (with the frozen biological sample) and at least one temperature monitoring tube, such as 50 to 500 sample tubes per goblet, or 5 to 25 sample tubes per goblet.

The following examples and drawings illustrate the present invention without, however, limiting the same thereto.

### BRIEF DESCRIPTION OF THE DRAWINGS

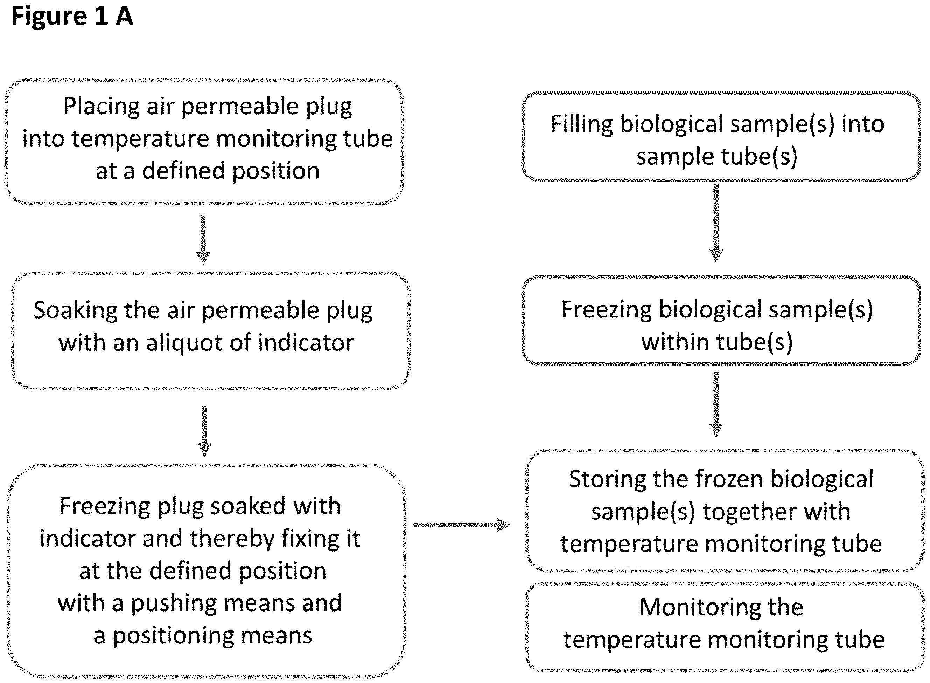

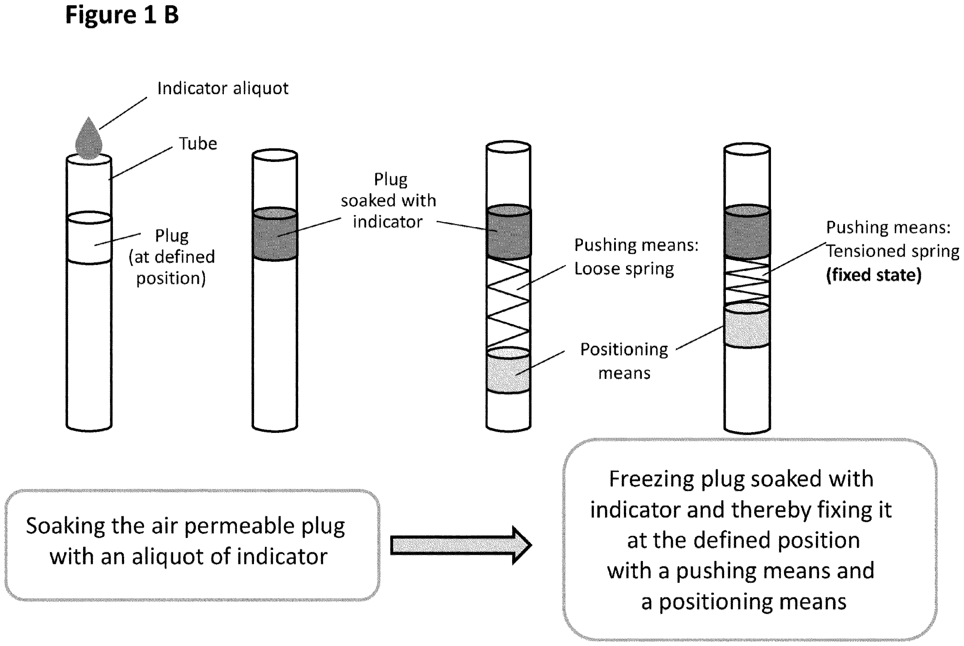

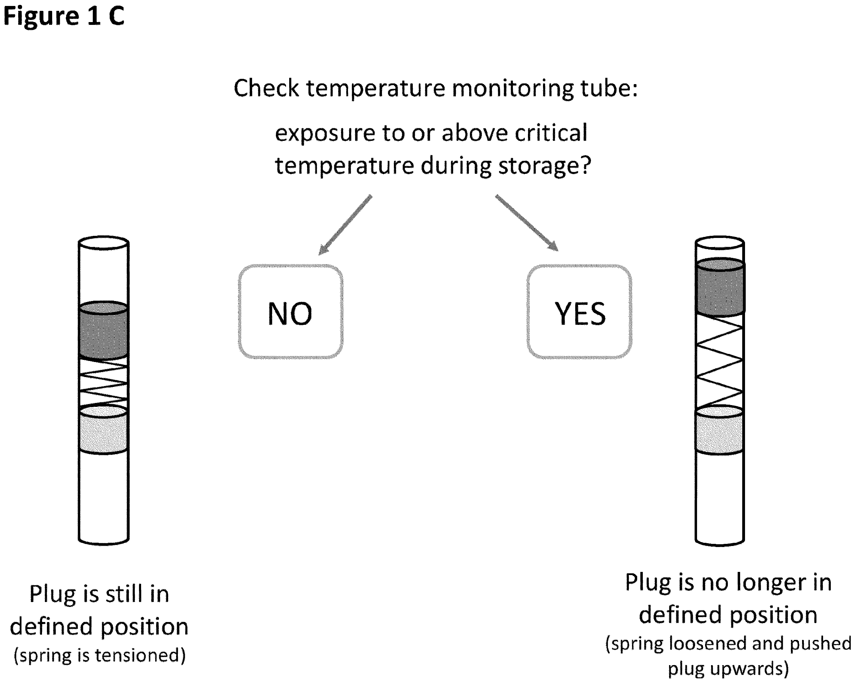

**Figure 1**. *An embodiment of the method of the invention.*
   A) Flow chart of the method.
   B) Steps for preparing the temperature monitoring tube.
   C) Shown are temperature monitoring tubes after storage: left - no exposure to/above critical temperature during storage, because the air permeable plug is still in its defined position; right - exposure to/above critical temperature during storage, because the air permeable plug is no longer in its defined position (it has moved upwards).

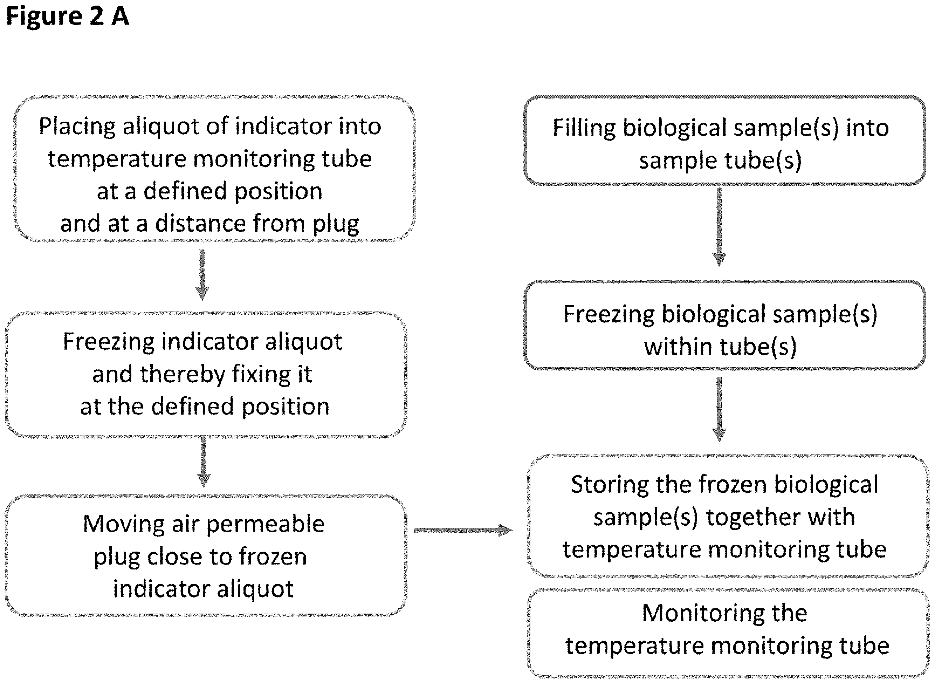

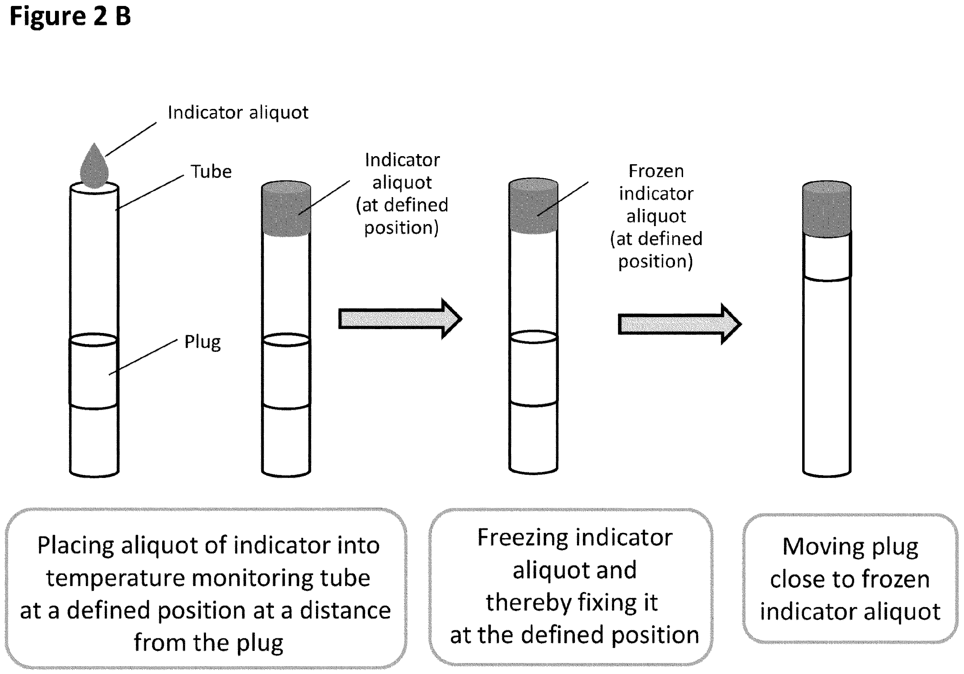

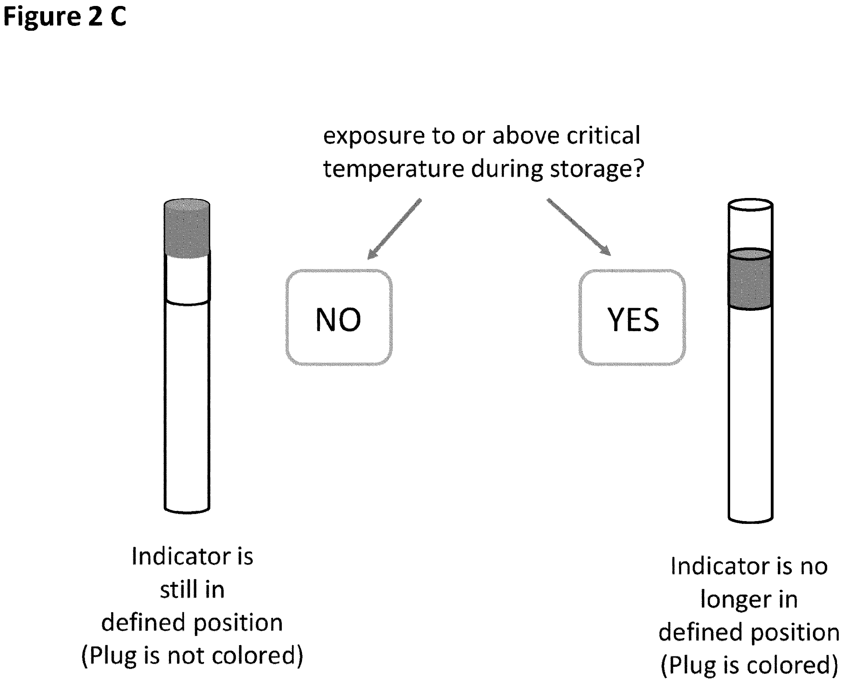

**Figure 2****.** *Another embodiment of the method of the invention.*
   A) Flow chart of the method.
   B) Steps for preparing the temperature monitoring tube.
   C) Shown are temperature monitoring tubes after storage: left - no exposure to/above critical temperature during storage, because the indicator aliquot is still in its defined position; rightexposure to/above critical temperature during storage, because the indicator aliquot is no longer in its defined position (it has also colored the plug).

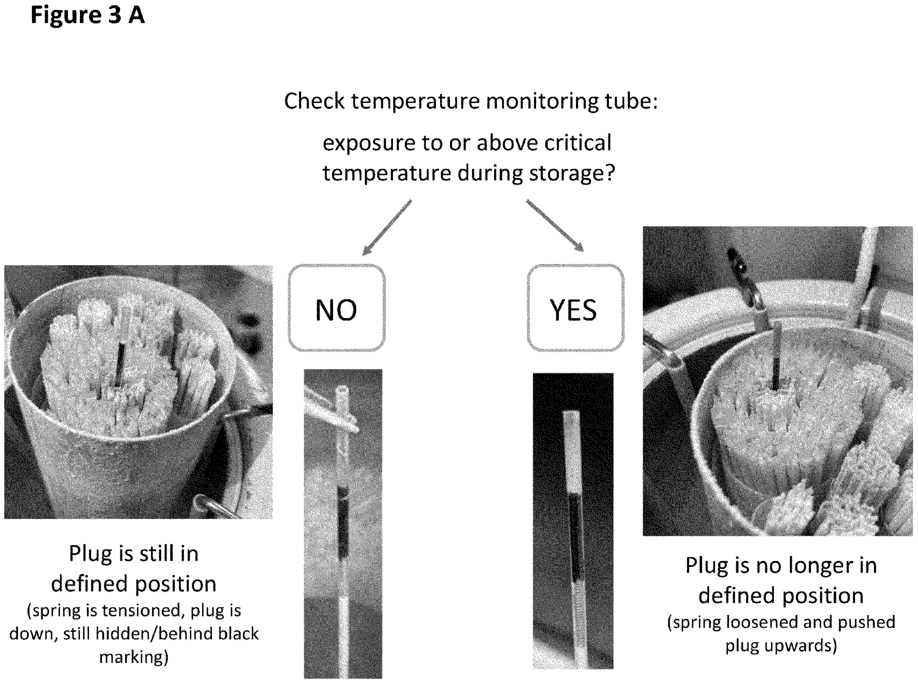

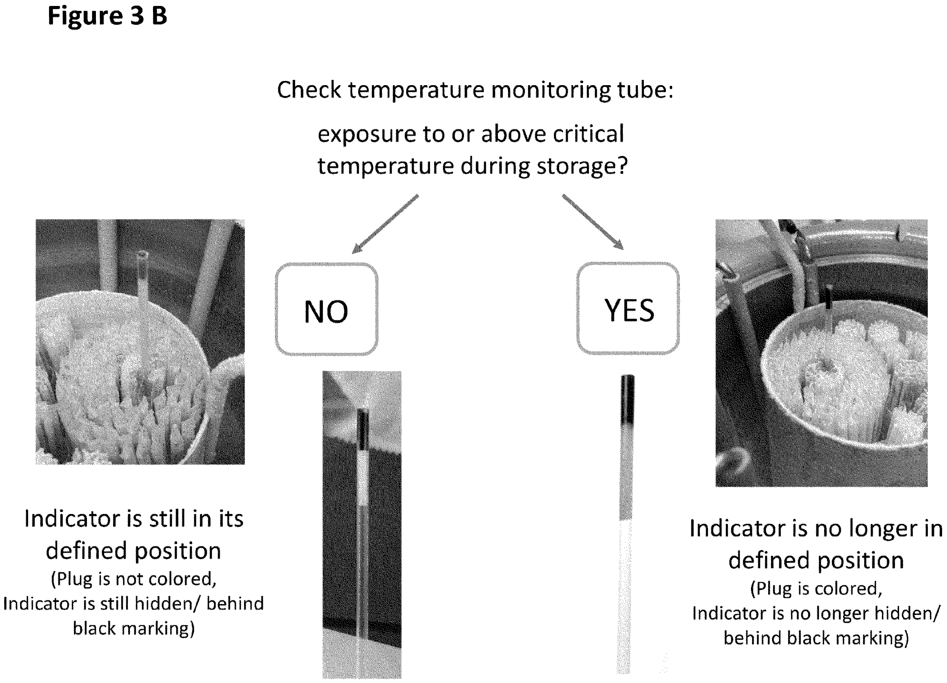

**Figure 3****.** *Uses of the temperature monitoring tubes.*
   A) Shown are tanks with frozen biological samples and a temperature monitoring tube according to one embodiment of the invention, left - - no exposure to/above critical temperature during storage, because plug in the temperature monitoring tube is still in its defined position; right - exposure to/above critical temperature during storage, because the plug in the temperature monitoring tube moved upwards.
   B) Shown are tanks with frozen biological samples and a temperature monitoring tube according to one embodiment of the invention, left - - no exposure to/above critical temperature during storage, because the indicator aliquot in the temperature monitoring tube is still in its defined position; right - exposure to/above critical temperature during storage, because the indicator aliquot in the temperature monitoring tube is no longer in its defined position and has colored the plug.

### EXAMPLES

A batch of 500 pieces of temperature monitoring devices according to the first embodiment of the method of the present invention (steps (1), (2a and 2b), (3), (4) and (5)) is produced as described in the following example:
1. Place a cotton plug of 5 mm length inside the plastic tubes in such a position that the end of the cotton plug which is close the end of the straw is at a distance to the end of the tube (such as about 13 mm).
2. Apply a black marking on the tube in such way that the cotton plug cannot be seen any longer. This marking is achieved best using a thermal transfer printer capable of printing all around the tube.
3. Prepare the indicator liquid by adding red food dye to 100 mL of propanol (such as 100% propanol) in such an amount to achieve a deeply red color of the indicator liquid.
4. Apply an aliquot of the red indicator liquid (such as 10 µL) to each plug with a syringe and needle in order to soak the plug with the indicator liquid.
5. Place a spring inside the tube in such a way that one end of the spring is close to the end of the soaked plug which is close to the middle of the tube.
6. Place a stick inside the tube in such a way that one end of the stick is close to the end of the spring which is close to the middle of the tube. Make sure there is no pressure applied to the spring.
7. Freeze the tubes with the soaked plug, the spring and the stick in a horizontal position using a freezing rack placed in nitrogen vapor at - 150°C.
8. Keep the tubes frozen for at least 30 minutes before pushing the stick completely into the straw thus pushing the spring onto the plug and loading the spring with tension. Make sure step 8 is performed under nitrogen vapor atmosphere with less than -130°C.
9. Transfer the temperature monitoring device into a container with liquid nitrogen.

The features disclosed in the foregoing description, in the claims and/or in the accompanying drawings may, both separately and in any combination thereof, be material for realizing the invention in diverse forms thereof.

## Claims

1. A method for monitoring frozen biological samples,
comprising the steps of:
(1) providing an indicator comprising a dye and an air permeable plug,
wherein said indicator is liquid at room temperature, solid when frozen to at least below -80°C and thaws at the temperature critical for a biological sample,
(2a) placing the air permeable plug into a sample tube which serves as the temperature monitoring tube,
wherein the air permeable plug is placed at a defined position in the temperature monitoring tube,
wherein the temperature monitoring tube preferably comprises a marking at the defined position;
and
(3a) soaking the air permeable plug with an aliquot of the indicator;
or
(2b) soaking the air permeable plug with an aliquot of the indicator; and
(3b) placing the air permeable plug obtained in step (2b) into a sample tube which serves as the temperature monitoring tube,
wherein the air permeable plug is placed at a defined position in the temperature monitoring tube,
wherein the temperature monitoring tube preferably comprises a marking at the defined position;
(4) freezing the air permeable plug in the temperature monitoring tube to at least below - 80°C and thereby fixating the frozen air permeable plug at said defined position;
(5) placing a pushing means and optionally a positioning means next to the frozen air permeable plug which is fixated at said defined position;
(6) filling the biological sample into at least one further sample tube;
(7) freezing the biological sample to at least below -80°C;
(8) storing the frozen biological sample in the at least one further sample tube together with the temperature monitoring tube in the same storage containment in liquid nitrogen or in nitrogen vapor,
(9) monitoring the temperature monitoring tube during storage and/or checking the temperature monitoring tube before the intended use of the biological sample, wherein
a plug which is not at the defined position indicates an exposure to temperatures above the temperature critical for the biological sample, and
a plug which is at the defined position indicates that there was no exposure to temperatures above the temperature critical for the biological sample.

2. The method of claim 1, wherein the pushing means is a spring, which is tensioned, and wherein the positioning means is a clamp rod which keeps the spring tensioned.

3. A method for monitoring frozen biological samples,
comprising the steps of:
(1) providing an indicator comprising a dye,
wherein said indicator is liquid at room temperature, solid when frozen to at least below -80°C and thaws at the temperature critical for a biological sample,
wherein said indicator optionally shrinks when frozen to at least below -80°C and expands while thawing,
(2) placing an air permeable plug in a sample tube which serves as the temperature monitoring tube,
wherein said air permeable plug is of such a color that it becomes visible in case the indicator has entered into the air permeable plug;
(3) placing an aliquot of said indicator in the temperature monitoring tube,
wherein the indicator aliquot is placed at a defined position of the temperature monitoring tube,
wherein the temperature monitoring tube preferably comprises a marking at the defined position;
(4) freezing the indicator aliquot located in the temperature monitoring tube to at least below -80°C,
wherein the frozen indicator aliquot is fixated at the defined position;
(5) moving the air permeable plug such that it is close to the frozen indicator aliquot or is optionally at the level of the indicator aliquot before it was frozen,
(6) filling the biological sample into at least one further sample tube;
(7) freezing the biological sample to at least below -80°C;
(8) storing the frozen biological sample in the at least one further sample tube together with the temperature monitoring tube in the same storage containment in liquid nitrogen or in nitrogen vapor,
(9) monitoring the temperature monitoring tube during storage and/or checking the temperature monitoring tube before the intended use of the biological sample, wherein:
an indicator aliquot which is not at the defined position and optionally a colored plug indicates an exposure to temperatures above the temperature critical for the biological sample, and
an indicator aliquot which is at the defined position and optionally a plug without color change indicates that there was no exposure to temperatures above the temperature critical for the biological sample.

4. The method of any one of claims 1 to 3, wherein the biological sample is semen, oocytes or non-human embryos,
and/or wherein the biological sample is semen and the temperature critical for semen is about -80°C, or wherein the biological sample is a vitrified sample and the temperature critical for the vitrified sample is about -150°C.

5. The method of any one of claims 1 to 4, wherein the sample tube is a tube for semen, wherein said semen is preferably intended for use in artificial insemination or *in vitro* fertilization.

6. The method of any one of the preceding claims, wherein the indicator comprises a mixture of alcohol(s) and/or water,
and/or wherein the dye is a red dye,
and/or wherein the aliquot of the indicator placed into the temperature monitoring tube at a defined position in step (3) is a frozen pellet of indicator.

7. The method of any one of the preceding claims, wherein the air permeable plug is made of material the indicator can penetrate, such as a wick, a cotton pad or powder,
and/or wherein the color of the air permeable plug is white or beige.

8. The method of any one of the preceding claims, wherein storage is over a time period of one day up to several years, such as one day to one year.

9. A temperature monitoring tube, comprising:
(a) an air permeable plug soaked with an indicator comprising a dye,
wherein said indicator is liquid at room temperature, solid when frozen to at least below -80°C and thaws at the temperature critical for a biological sample,
wherein said air permeable plug is located at a defined position in the temperature monitoring tube and is fixated at said defined position by freezing,
(b) a pushing means, which is located next to the frozen air permeable plug, and,
(c) optionally, a positioning means.

10. The temperature monitoring tube of claim 9, wherein the pushing means is a spring, which is tensioned after the plug is frozen, and wherein the positioning means is a clamp rod which keeps the spring tensioned.

11. A temperature monitoring tube, comprising
(a) an indicator comprising a dye,
wherein said indicator is liquid at room temperature, solid when frozen to at least below -80°C and thaws at the temperature critical for a biological sample,
wherein said indicator is placed into the temperature monitoring tube at a defined position in its liquid state and becomes fixated at said defined position while frozen,
wherein said indicator optionally shrinks when frozen to at least below -80°C and expands while thawing,
and
(b) an air permeable plug, which is close to the indicator when it is frozen.

12. The temperature monitoring tube of any one of claims 9 to 11, wherein
the indicator comprises a mixture of alcohol(s) and/or water,
and/or the dye is a red dye;
and/or wherein the biological sample is semen and the temperature critical for semen is about -80°C, or wherein the biological sample is a vitrified sample and the temperature critical for the vitrified sample is about -150°C.

13. The temperature monitoring tube of any one of claims 9 to 12, wherein the air permeable plug is a made of material the indicator can penetrate, such as a wick, a cotton pad or powder,
and/or wherein the air permeable plug is of such a color that it becomes visible in case the indicator has entered into the air permeable plug,
such as white or beige;
and/or wherein the temperature monitoring tube comprises a marking at the defined position.

14. Use of a temperature monitoring tube of any one of claims 9 to 13 for monitoring frozen biological samples.

15. A biological sample storage kit, comprising
(a) at least one sample tube, and
(b) at least one temperature monitoring tube as defined in any one of claims 9 to 13,
(c) optionally, a storage containment,
wherein the biological sample is preferably semen, oocytes or non-human embryos,
and/or wherein, preferably, the biological sample is semen and the temperature critical for semen is about -80°C, or wherein the biological sample is a vitrified sample and the temperature critical for the vitrified sample is about -150°C,
and/or wherein the at least one sample tube is preferably a seminal tube.
